# EUROPEAN PATENT SPECIFICATION

(11) **EP 2 716 165 B1**
(45) Date of publication and mention of the grant of the patent: **25.03.2015**
(21) Application number: 13185102.4
(22) Date of filing: 19.09.2013
(51) Int. Cl.: A23G 1/18, A23G 1/00

(54) **Chocolate tempering machine**
Schokoladentemperiermaschine
Machine pour témperage du chocolat

(30) Priority: 04.10.2012 IT MI20121658
(43) Date of publication of application: 09.04.2014
(73) Proprietor: G.S.G. S.r.l., 36075 Montecchio Maggiore - Vicenza (IT)
(72) Inventor: BRAVO, Genesio, 36050 SOVIZZO-VICENZA (IT); BRAVO, Stefano, 36050 SOVIZZO - VICENZA (IT)
(74) Representative: Martegani, Franco

(56) References cited:
- EP-A1- 0 523 045
- GB-A- 945 030
- US-A- 3 384 003

## Description

The present invention relates to a chocolate tempering machine.

Chocolate tempering machines are well-known in the confectionery industry, in particular for the preparation of coated chocolates and the like, such as, for example, the machines described in Italian patent applications MI2011A001039 and MI2011A001164 filed in the name of the same Applicant, and to which the following description will make explicit reference, at the same time maintaining its generic characteristics.

US 3384003 discloses a chocolate tempering machine comprising heated cylinders for the excess chocolate.

A tempering machine generally comprises a tank containing the chocolate being processed and the tank is connected by means of an outflow tube to a pump (normally of the worm-conveyor type), in turn connected to a tube terminating in a distribution spout which is situated above the tank, thus causing a free fall into the underlying chocolate collecting tank at a certain temperature, called crystallization temperature, in a kind of closed circuit.

In this way, when the chocolate is removed from beneath the distribution spout, at the crystallization temperature, and allowed to solidify, thanks to the formation of crystal particulates of cocoa butter (integral part of the chocolate blend), a perfectly glossy chocolate is obtained, having a uniform colour and organoleptically optimum.

At present, one of the problems encountered during the processing of chocolate in a known tempering machine, is, that as the chocolate is at a temperature (29-32°C) relatively close to the solidification point (24-25°C), and as it is necessary to operate in an environment under a controlled temperature ranging from 18°C to 20°C, it tends to solidify at the exact moment in which it comes into contact with a surface at room temperature.

In a known tempering machine of the type mentioned above, surfaces at room temperature are present, in particular but not only, in the so-called "food" zone, i.e. in the area of the machine where the chocolate is continuously falling and recirculating.

One of these areas at room temperature is, for example, the anti-intrusion ring nut assembled above the above-mentioned collection container of the chocolate falling from the nozzle, i.e. a safety ring nut suitable for preventing the operator from erroneously inserting his hands inside the tempering machine.

A considerable drawback which generally arises is that, as this safety ring nut is not heated, even if it is positioned above the heating tank of the chocolate, during tempering operations, it becomes so cold (due to the influence of the environment), that the chocolate begins to accumulate solidified. This causes the rapid formation of an accumulation of chocolate on the same ring nut which therefore complicates the normal operating operations of the tempering machine.

The same problem also arises on the conveyor belt/metal mesh coater, rotatingly situated around a pair of pulleys and toothed gears below the above-mentioned dispenser nozzle and above the above-mentioned collection container, and suitable for allowing the chocolates in formation to advance continuously.

During the chocolate formation phase, in fact, the metal meshes of the moving belt, immersed in chocolate, cause the dripping of excess chocolate in correspondence with the pair of pulleys.

Consequently, known tempering machines are equipped with specific tilted sheets suitable for collecting the excess chocolate falling from the above-mentioned pulleys and sending it to the above-mentioned collection tank.

Like the above-mentioned safety ring nut, the tilted sheet is also at room temperature and therefore causes the solidification of the chocolate falling onto it, thus preventing it from returning to the tank.

In order to eliminate these drawbacks, the use has been known for some time of anti-intrusion grids, and/or tilted sheets suitably heated by means of various types of electric resistances, for example of the wire-, sheet-, ring- type and similar, capable of blocking the chocolate solidification process, but which are very difficult, however, to clean and sanitize due to the presence of the electric components (resistances, wires and contacts).

The objective of the present invention is therefore to overcome the considerable problems of the known art described above.

In particular, the objective of the present invention is to provide a chocolate tempering machine with an optimum recycling of the chocolate, without solidification, which prevents normal functioning and which is easy to clean and sanitize.

The above objectives are achieved by a tempering machine having the characteristics illustrated in claim 1 and enclosed dependent claims.

The structural and functional characteristics of the present invention and its advantages with respect to the known art will appear even more evident from the underlying claims, in particular from the following description referring to the enclosed drawings which show the schematization of a preferred but non-limiting embodiment of a tempering machine according to the invention, in which:
- figure 1 is a perspective view of a preferred embodiment of the tempering machine in question, with some parts removed for the sake of clarity;
- figure 2 is another perspective view of the tempering machine in question; and
- figure 3 represents a perspective view of a detail of the tempering machine of figures 1 and 2.

With reference to the enclosed figures, M indicates a chocolate tempering machine, for example for the production of coated chocolates and the like, such as, for example, the machines described and illustrated, to which the present invention explicitly refers.

The machine M is of the known type, described and illustrated, for example, in Italian patent applications MI2011A001039 and MI2011A001164 filed in the name of the Applicant and essentially comprising a tank containing chocolate (known and not illustrated), which is connected to a pump (normally of the worm conveyor type, also known and not illustrated) which is in turn connected to a dispenser E of tempered chocolate, positioned in correspondence with a front portion or control console Z of the machine M.

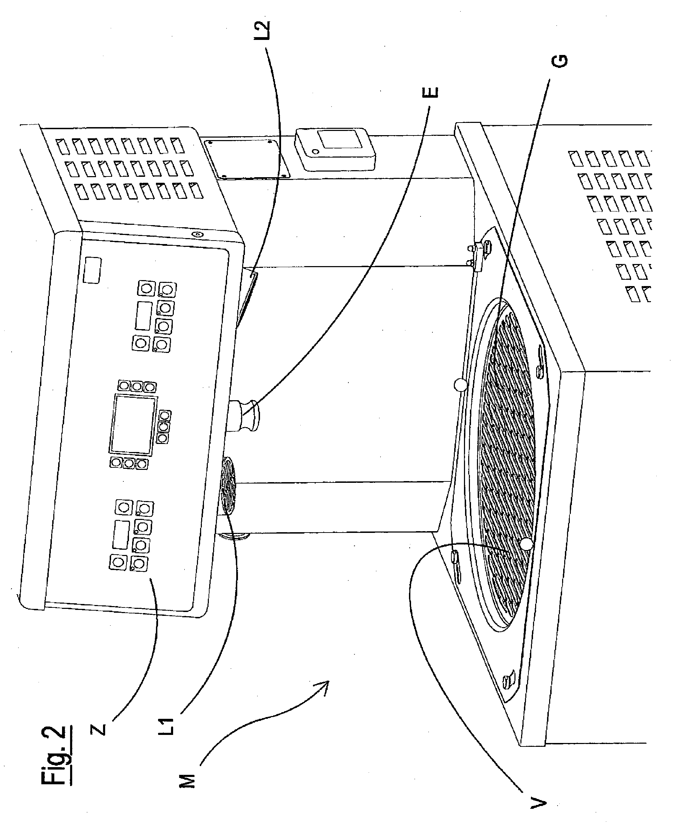

Beneath the chocolate dispenser E, a conveyor C is positioned and operating, in which the chocolates are formed, and also a tank container V (figure 2) situated beneath the dispenser E for collecting the excess chocolate falling from the dispenser E through the conveyor C.

An anti-intrusion or protective ring nut G, is assembled on the container V.

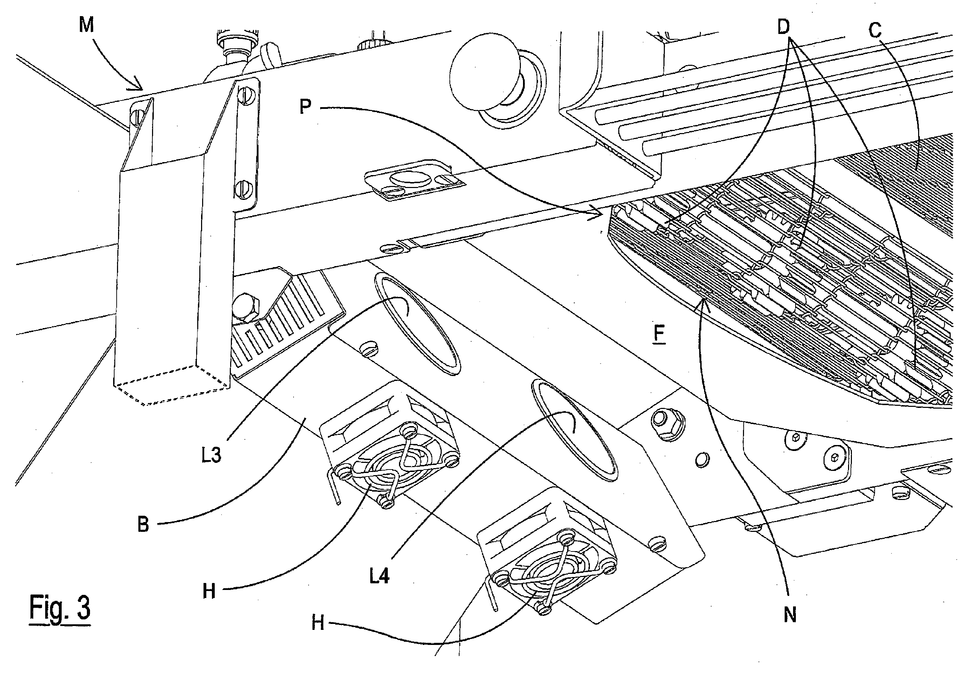

According to what is illustrated in figure 3, the conveyor C is of the known type, comprising a belt N with metal meshes, ring-enveloped around a pair of pulleys P with toothed gears D (a single pulley P with three gears D in figure 3) suitable for being engaged with the meshes of the belt N to move the same belt N in a horizontal direction with a continuous movement.

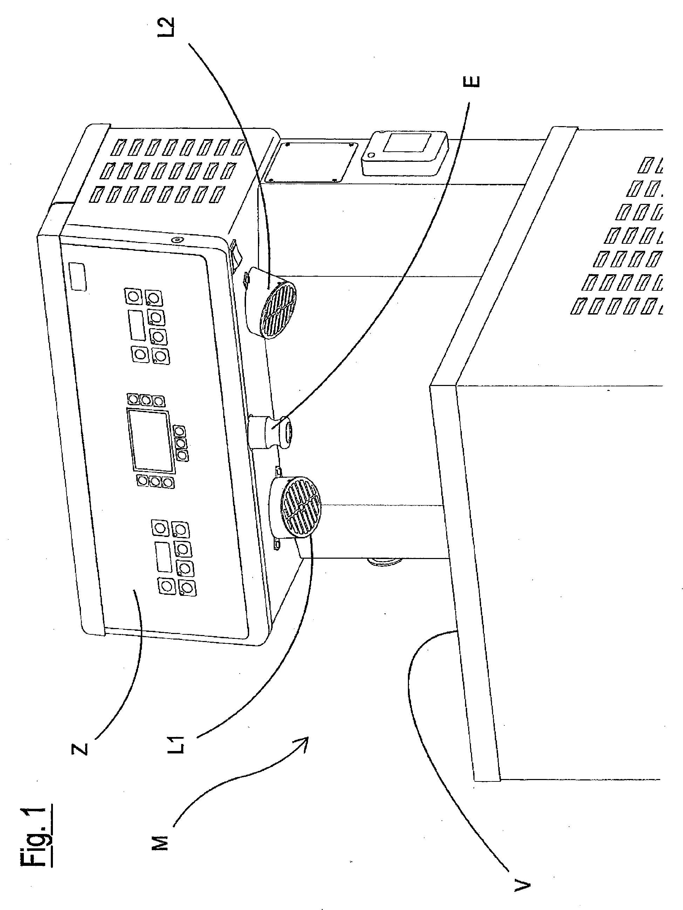

According to what is illustrated in figures 1 and 2, according to the invention, two lamps L1 and L2 are orientably fixed on the console Z, at the opposite side with respect to the dispenser E, suitable for being oriented, in particular towards the container V equipped with the grid G.

In this way, the heat produced by the lamps L1 and L2 is capable of maintaining a temperature (29-30°C) on the grid G, by means of thermal radiation, which is sufficient and suitable for preventing the undesired solidification on the grid G, of excess chocolate falling from the dispenser E through the belt N.

Two lamps L3 and L4 are also fixed in a box B positioned in correspondence with an end portion of the belt N, with the two lamps L3 and L4 substantially directed towards a tilted sheet F suitable for removing and diverting excess chocolate exiting in correspondence with the pulley P in order to maintain a temperature (29-30°C) on the sheet F, by means of thermal radiation, which is sufficient and suitable for preventing the undesired solidification on the sheet F, of excess chocolate falling from the dispenser E through the belt N.

The lamps L1-L4 are of the incandescent type, or, alternatively, are halogen lamps or equivalent.

As a further advantage, the lamps L1-L4 are also capable of providing an optimum operating illumination in correspondence with the mentioned operative areas of the machine M.

Finally, the machine M comprises air suction and circulation fans, such as those illustrated, for example, with H (suction and/or blowing means) in figure 3, assembled in correspondence with the lamps L1-L4 and automatically activated when a certain threshold temperature is exceeded, in order to maintain a desired temperature which is substantially constant, avoiding excessive thermal increases caused by the same L1-L4 lamps.

The protection scope of the invention is determined by the enclosed claims.

## Claims

1. A chocolate tempering machine (M) comprising dispensing means (E) for the distribution of tempered chocolate, rotating horizontal conveyer means (C, N), with metal meshes, situated beneath said dispensing means (E); and a collection tank (V) for the excess chocolate falling from said dispensing means (E) positioned under said conveyor means (C,N); **characterized in that** it also comprises irradiating means (L1,L2,L3,L4) suitable for diffusing heat towards certain areas (V,P) situated downstream of said dispensing means (E).

2. The machine according to claim 1, **characterized in that** said irradiating means (L1,L2,L3,L4) are assembled in correspondence with said dispensing means (E) and suitable for being oriented towards said collection tank container (V).

3. The machine according to claim 1, **characterized in that** said irradiating means (L1,L2,L3,L4) are assembled in correspondence with said conveyor means (C,N) and oriented towards at least one end ring-enveloped around a pulley (P) of the same conveyor means (C,N).

4. The machine according to any of the claims from 1 to 3, **characterized in that** said heat irradiating means (L1,L2,L3,L4) comprise lighting means.

5. The machine according to claim 4, **characterized in that** said lighting means consist of incandescent lamps.

6. The machine according to claim 4, **characterized in that** said lighting means consist of halogen lamps.

7. The machine according to any of the claims from 1 to 6, **characterized in that** it also comprises suction means and/or blowing means and air circulation means (H), suitable for acting in correspondence with said irradiating means (L1,L2,L3,L4).

## Patentansprüche

1. Schokoladentemperiermaschine (M), die Abgabemittel (E) für die Verteilung von temperierter Schokolade, Drehhorizontalfördermittel (C, N) mit Metallgittern, die unterhalb der Abgabemittel (E) gelegen sind; und einen Sammeltank (V) für die Überschussschokolade, die von den Abgabemitteln (E) herunterfällt, der unter den Fördermitteln (C, N) angeordnet ist, umfasst; **dadurch gekennzeichnet, dass** sie auch Bestrahlungsmittel (L1, L2, L3, L4) umfasst, die zum Ausbreiten von Wärme in Richtung bestimmter Bereiche (V, P) geeignet sind, die stromabwärts von den Abgabemitteln (E) gelegen sind.

2. Maschine nach Anspruch 1, **dadurch gekennzeichnet, dass** die Bestrahlungsmittel (L1, L2, L3, L4) in Übereinstimmung mit den Abgabemitteln (E) eingebaut sind und zur Ausrichtung in Richtung des Sammeltankbehälters (V) geeignet sind.

3. Maschine nach Anspruch 1, **dadurch gekennzeichnet, dass** die Bestrahlungsmittel (L1, L2, L3, L4) in Übereinstimmung mit den Fördermitteln (C, N) eingebaut und in Richtung von zumindest einem Ende ausgerichtet sind, das als Ring um eine Riemenscheibe (P) derselben Fördermittel (C, N) geschlungen ist.

4. Maschine nach einem der Ansprüche 1 bis 3, **dadurch gekennzeichnet, dass** die Wärmestrahlungsmittel (L1, L2, L3, L4) Beleuchtungsmittel umfassen.

5. Maschine nach Anspruch 4, **dadurch gekennzeichnet, dass** die Beleuchtungsmittel aus Glühlampen bestehen.

6. Maschine nach Anspruch 4, **dadurch gekennzeichnet, dass** die Beleuchtungsmittel aus Halogenlampen bestehen.

7. Maschine nach einen der Ansprüche 1 bis 6, **dadurch gekennzeichnet, dass** sie auch Saugmittel und/oder Blasmittel und Luftzirkulationsmittel (H) umfasst, die zum Wirken in Übereinstimmung mit den Bestrahlungsmitteln (L1, L2, L3, L4) geeignet sind.

## Revendications

1. Machine à tempérer le chocolat (M) comprenant un moyen de distribution (E) pour la distribution de chocolat tempéré, un moyen formant convoyeur horizontal rotatif (C, N), avec des treillis métalliques, situé sous ledit moyen de distribution (E) ; et une cuve de récupération (V) pour l'excédent de chocolat qui tombe dudit moyen de distribution (E) positionné sous ledit moyen formant convoyeur (C, N) ; **caractérisée en ce qu'**elle comprend en outre des moyens irradiants (L1, L2, L3, L4) adaptés pour diffuser de la chaleur vers certaines zones (V, P) situées en aval dudit moyen de distribution (E).

2. Machine selon la revendication 1, **caractérisée en ce que** lesdits moyens irradiants (L1, L2, L3, L4) sont montés en correspondance avec ledit moyen de distribution (E) et adaptés pour être orientés vers ladite cuve de récupération (V).

3. Machine selon la revendication 1, **caractérisée en ce que** lesdits moyens irradiants (L1, L2, L3, L4) sont montés en correspondance avec ledit moyen formant convoyeur (C, N) et orientés vers au moins une bague d'extrémité enveloppée autour d'une poulie (P) du même moyen formant convoyeur (C, N).

4. Machine selon l'une quelconque des revendications 1 à 3, **caractérisée en ce que** lesdits moyens irradiants (L1, L2, L3, L4) comprennent des moyens éclairants.

5. Machine selon la revendication 4, **caractérisée en ce que** lesdits moyens éclairants sont constitués de lampes à incandescence.

6. Machine selon la revendication 4, **caractérisée en ce que** lesdits moyens éclairants sont constitués de lampes à halogène.

7. Machine selon l'une quelconque des revendications 1 à 6, **caractérisée en ce qu'**elle comprend en outre un moyen d'aspiration et/ou un moyen de soufflage et un moyen de circulation d'air (H), adaptés pour agir en correspondance avec lesdits moyens irradiants (L1, L2, L3, L4).
